# FASCICULE DE BREVET EUROPEEN

(11) **EP 3 455 102 B1**
(45) Date de publication et mention de la délivrance du brevet: **22.04.2020**
(21) Numéro de dépôt: 17728907.1
(22) Date de dépôt: 09.05.2017
(51) Int. Cl.: B60Q 1/14, B60Q 1/12, B60Q 1/10, B60Q 1/18

(54) **SYSTEME ET PROCEDE D'ECLAIRAGE POUR VEHICULE AUTOMOBILE**
BELEUCHTUNGSSYSTEM UND VERFAHREN FÜR EIN KRAFTFAHRZEUG
LIGHTING SYSTEM AND METHOD FOR A MOTOR VEHICLE

(30) Priorité: 11.05.2016 FR 1654193
(43) Date de publication de la demande: 20.03.2019
(73) Titulaire: PSA Automobiles SA, 78300 Poissy (FR)
(72) Inventeur: SEREZAT, Laurent, 91410 Corbreuse (FR)
(86) Numéro de dépôt international: PCT/FR2017/051100
(87) Numéro de publication internationale: WO 2017/194868

(56) Documents cités:
- EP-A1- 2 957 464
- EP-A2- 2 085 264
- DE-A1-102007 028 658
- US-A1- 2014 307 458

## Description

La présente invention concerne de manière générale les systèmes d'éclairage pour véhicules automobiles.

Ces systèmes mettent en œuvre une paire de projecteurs ou phares, situés à l'avant du véhicule et projetant un faisceau lumineux vers l'avant du véhicule pour éclairer la route de nuit.

De manière générale un projecteur comprend un module d'éclairage incluant une source de lumière, un réflecteur, une carte de circuit imprimé dans le cas d'une diode électroluminescente comme source lumineuse, potentiellement une lentille pour projeter la lumière émise vers l'avant et une glace située devant pour protéger la source et les optiques.

L'utilisation de modules d'éclairage à Leds permet via de multiples Leds intégrées dans un ou plusieurs modules de type réflecteur ou elliptique, de réaliser des fonctionnalités de feu de route dans lesquelles le faisceau est découpé en multiples segments de faisceaux. Un tel faisceau « matriciel » est désigné également par les termes anglo-saxons « Matrix Beam » qui sert également à désigner le système d'éclairage utilisant ce type de faisceaux.

Le principe du « Matrix Beam » est le suivant :
Pour une fonction d'éclairage de type feu de route, chaque projecteur du véhicule, appelé véhicule porteur, projette un cône de lumière adapté sur la route devant le véhicule porteur.

Quand un ou plusieurs autres véhicules viennent en face ou le précèdent, le système maintient les cônes de lumière tout en créant une zone sombre devant le véhicule porteur, appelée également effet « tunnel ». Cet effet « tunnel » vient masquer une partie de la zone éclairée par le véhicule porteur de manière à éviter tout éblouissement pour les conducteurs des autres véhicules présents dans la zone éclairée par le véhicule porteur ; les autres véhicules évoluent donc dans une zone de non éblouissement.

Le système est capable de suivre la trajectoire du véhicule porteur en optimisant la visibilité de nuit du conducteur du véhicule porteur sans pour autant éblouir les conducteurs des autres véhicules.

La détection et la localisation des autres véhicules sont réalisées par un ou plusieurs capteurs et généralement par une caméra associée à un module de traitement des informations issues des images restituées par la caméra.

Le système, en fonction de ces informations, adapte automatiquement les segments de faisceaux à l'environnement du véhicule porteur, mais les modules qui mettent en œuvre la fonction, ne tournent pas ou au mieux tournent suivant un débattement angulaire limité à quelques degrés. La plupart des modules sont asservis à la fonction de feu de croisement, elle-même asservie à la courbure des virages pour réaliser la fonction DBL : acronyme anglo-saxon pour « Dynamic Bending Light » : éclairage dynamique en virage.

La rotation des modules est commandée en fonction de la courbure des virages et l'intensité de l'éclairage des modules est également commandée, notamment par des lois de commande qui sont décrites par exemple, dans les documents EP1129899A1 et EP1129900A1.

Or, dans de nombreuses situations de vie, les segments devront suivre les côtés du véhicule porteur qui va par exemple tourner, à une intersection ou entamer un virage serré et qui peut en même temps avoir besoin d'adapter l'effet tunnel quand un ou plusieurs véhicules empiètent sur la zone éclairée par le véhicule porteur.

Cela nécessite donc des modules d'éclairage avec des débattements angulaires indépendants et suffisamment grands (plusieurs dizaines de degrés) pour couvrir ces situations de vie, ce que ne permettent pas les systèmes d'éclairage de l'état de l'art pour lesquels les débattements angulaires des optiques/miroirs sont de quelques degrés de l'ordre de 2 à 5°. Le document US2014/307458 répond partiellement à ce besoin en proposant un module complémentaire commandé indépendamment en azimut et comportant une pluralité de sources de lumière aptes à générer respectivement des segments de faisceaux de route. Ainsi, ce module éclaire des zones en complément du faisceau de croisement à l'aide des segments de faisceaux en fonction de la détection d'un ou plusieurs obstacles détectés pour réaliser un complément d'éclairage dans les zones non couvertes par le faisceau de croisement et/ou pour créer une ou plusieurs zones sombres entre le véhicule et le ou les obstacles détectés en éteignant des segments de faisceaux correspondants.

Un but de la présente invention est de répondre aux inconvénients des systèmes actuels et en particulier, de fournir un système d'éclairage de véhicule simple à mettre en œuvre et capable de fournir une photométrie modulable et combinant de multiples fonctionnalités à des niveaux de performances optimales. Chaque module complémentaire a au moins un débattement angulaire en azimut du même ordre de grandeur que l'angle du champ de vision de la caméra (CAM) de l'ordre de 45°.

Le débattement angulaire global du système d'éclairage en azimut est obtenu par des combinaisons déterminées des débattements angulaires de chacun des modules complémentaires aptes à être commandés indépendamment les uns des autres et/ou en complémentarité pour certains d'entre eux en fonction des situations de vie rencontrées.

Grace à leur débattement angulaire indépendant ou combiné, les modules complémentaires sont aptes à éclairer des zones qui peuvent être comprises à la fois à l'intérieur du champ de vision de la caméra et/ou qui sont en limite voire même hors limite du champ de vision de la caméra.

Pour cela un premier aspect de l'invention concerne un système d'éclairage pour véhicule automobile, selon les caractéristiques techniques de la revendication 1.

Selon une caractéristique, chaque module complémentaire a au moins un débattement angulaire en azimut du même ordre de grandeur que l'angle du champ de vision de la caméra.

Selon une caractéristique, les segments de faisceaux de chaque module complémentaire se chevauchent.

Selon une autre caractéristique, l'unité de commande est apte à commander l'intensité de l'éclairage de chacun des modules complémentaires au flux maximal.

Selon une autre caractéristique, chaque module complémentaire est identique et est constitué d'un équipage mobile, comportant un boitier mobile en rotation autour de son axe vertical et supportant de manière fixe, d'un premier côté, un réflecteur de lumière, et d'un autre côté, opposé au premier, une lentille de projection apte à projeter les segments de faisceaux, générés respectivement par une pluralités de sources lumineuses disposées en regard du réflecteur ; les segments de faisceaux étant réfléchis par le réflecteur dans des directions perpendiculaires au plan principal de la lentille.

Un deuxième aspect de l'invention concerne un procédé pour la mise en œuvre d'un système d'éclairage tel que décrit ci-dessus, caractérisé en ce qu'il consiste :
- à détecter un obstacle dans le champ de vision du capteur d'images ;
- à commander le déplacement en azimut d'un ou plusieurs modules complémentaires en fonction de la position de l'obstacle détecté dans le champ de vision de la caméra, et
- à allumer ou éteindre un ou plusieurs segments de faisceaux de modules complémentaires déterminés en fonction de la position de l'obstacle par rapport au véhicule porteur pour créer une zone sombre en direction de l'obstacle.

Selon une caractéristique, le procédé consiste, lorsque plusieurs obstacles sont identifiés à l'intérieur du champ de vision du capteur d'images :
- à créer et ajuster plusieurs zones sombres en fonction des obstacles détectés dans le champ de vision de la caméra en éteignant un ou plusieurs segments de faisceaux correspondants en fonction de la position des obstacles par rapport au véhicule porteur.

Selon une autre caractéristique, l'intensité du ou des segments de faisceaux est commandée pour être maximale en dehors de la ou des zones sombres.

Selon une autre caractéristique, le procédé consiste à allumer ou éteindre le ou les segments de faisceaux de manière progressive.

Selon une autre caractéristique, il consiste à créer et ajuster une ou plusieurs zones sombres en fonction du ou des obstacles détectés dans le champ de vision de la caméra, quelle que soit la distance séparant le ou les obstacles du véhicule porteur.

Un troisième et dernier aspect de l'invention concerne un véhicule automobile comportant système d'éclairage tel que décrit ci-dessus.

La présente invention a pour avantage de répondre aux situations de vie dans lesquelles la voiture bénéficie à la fois de l'éclairage de type DBL et de l'effet tunnel indépendamment du module d'éclairage qui est dédié à la fonction de feu de croisement.

La présente invention a également pour avantage de pouvoir faire un « multi tunnel » très large, plus large qu'avec des modules statiques « Matrix Beam » statique ou avec des systèmes où le débattement angulaire des optiques/miroirs sont limités à quelques degrés, et d'éclairer les bas-côtés de la route lors du croisement d'un véhicule sur une durée plus longue qu'avec une solution « Matrix Beam » statique.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un projecteur droit d'un véhicule automobile participant au système d'éclairage selon l'invention ;
- les figures 2 à 5 représentent respectivement quatre exemples de photométries réalisées à partir du système d'éclairage selon la présente invention ;
- la figure 6 représente une première situation de vie avec un système d'éclairage de l'état de l'art équipée d'une fonction « Matrix Beam » statique mais qui est dans l'incapacité de répondre de manière optimale à cette situation de vie ;
- la figure 7 représente la même première situation de vie mais avec un système d'éclairage selon la présente invention équipé d'une fonction « Matrix Beam » dynamique qui elle est applicable pour cette même situation de vie ;
- la figure 8 représente une deuxième situation de vie avec un système d'éclairage selon la présente invention équipé d'une fonction « Matrix Beam » dynamique mettant en évidence la création d'un multi-tunnel ;
- la figure 9 représente une troisième situation de vie à l'abord d'un virage avec un système d'éclairage de l'état de l'art équipé d'une fonction « Matrix Beam » statique mais qui est dans l'incapacité de répondre de manière optimale à cette situation de vie ;
- la figure 10 représente une première étape d'une situation similaire à la troisième situation de vie mais avec un système d'éclairage selon la présente invention équipé d'une fonction « Matrix Beam » dynamique et qui est applicable pour cette troisième situation de vie ; et
- la figure 11 représente une deuxième étape de la situation de vie de la figure 10.

D'autres situations de vie, non illustrées, comme les dépassements sont également gérées par le système selon l'invention.

Le nombre, la largeur des segments de faisceaux et leurs angles de débattement sont adaptés pour former un ou plusieurs tunnels (Multi-tunnel) et offrir un gain de visibilité maximale en dehors des tunnels.

La réactivité du système permet l'adaptation rapide des faisceaux à la situation de vie rencontré, sans toutefois introduire de transitions lumineuses brutales en ajustant progressivement l'intensité des flux lumineux de chaque segment de faisceau (effet « dimmer »)

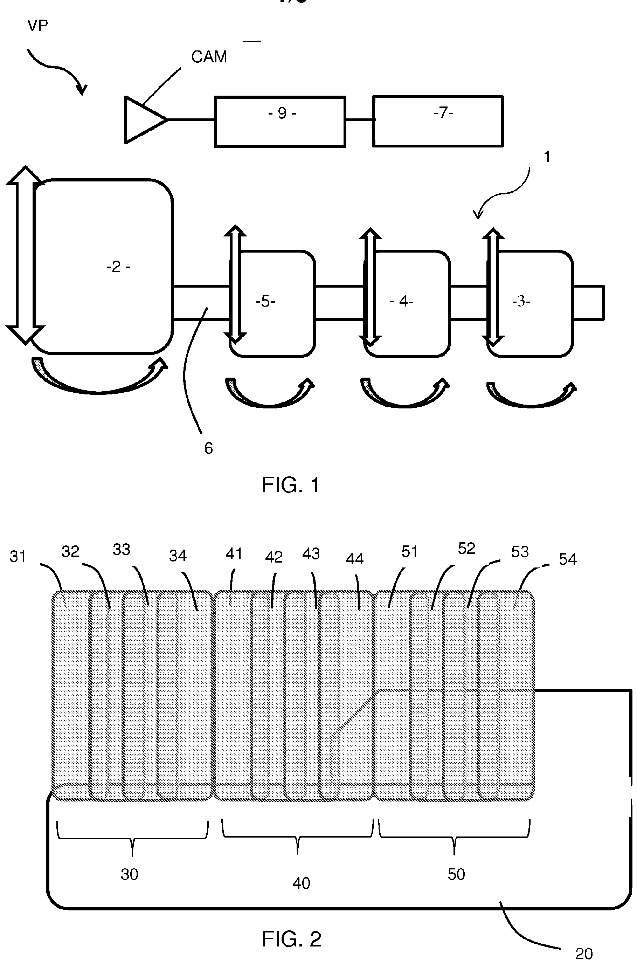

La figure 1 représente schématiquement le système d'éclairage selon l'invention mettant en œuvre deux projecteurs d'un véhicule porteur VP. Sur la figure, seul le projecteur droit 1 est représenté (projecteur considéré par le conducteur installé au volant de son véhicule).

Comme représenté, ce projecteur 1 comprend un premier module d'éclairage 2 ou module principal (le plus à l'extérieur du projecteur 1) agencé pour émettre un faisceau de croisement 20. Le projecteur 1 comprend un ou plusieurs moteurs (non représentés) agencés pour le réglage du premier module 2 en site et en azimut selon les flèches verticale et horizontale de la figure 1. Le faisceau de croisement 20 est à coupure à X° (par exemple 15°) lui permettant d'illuminer également le bas-côté de la route.

Le projecteur 1 comprend également une pluralité de modules d'éclairage complémentaires 3, 4 et 5, référencés en partant de l'intérieur du projecteur 1 (au nombre de trois dans le mode de réalisation considéré) et agencés pour émettre chacun un faisceau de route 30, 40 et 50 différent du faisceau de croisement 20. Par différent du faisceau de croisement, il est entendu la forme du faisceau, son intensité ou du même genre. Ces trois modules complémentaires 3, 4 et 5 seront désignés par modules MB, en reprenant l'acronyme pour « Matrix Beam », dans la mesure où ces trois modules 3, 4 et 5 sont aptes à réaliser la fonction dite de « Matrix Beam » et plus particulièrement une fonction « Matrix Beam » dynamique.

Chaque module complémentaire MB 3, 4 et 5 est identique et est constitué d'un équipage mobile, non représenté, comportant un boitier mobile en rotation autour de son axe vertical et supportant de manière fixe, d'un premier côté, un réflecteur de lumière, et d'un autre côté, opposé au premier, une lentille de projection apte à projeter les segments de faisceaux, générés respectivement par une pluralités de sources lumineuses notamment des Leds, supportées par une carte de circuit imprimé et disposées en regard du réflecteur ; les segments de faisceaux étant réfléchis par le réflecteur dans des directions perpendiculaires au plan principal de la lentille. Ainsi, c'est le module d'éclairage/équipage mobile complet qui réalise le débattement angulaire en tournant autour de son axe de rotation.

Dans l'exemple considéré, chaque module MB 3, 4 et 5 comporte quatre Leds (non représentées), aptes à former respectivement quatre segments de faisceau de route 31-34, 41-44, 51-54.

Le projecteur 1 dispose donc, au total, de douze Leds (non représentées) aptes à générer respectivement douze segments de faisceaux de route, à multiplier par deux si on considère le projecteur de gauche, non représenté sur la figure 1.

La détection et la localisation des autres véhicules sont réalisées par un ou plusieurs capteurs d'images et généralement par une caméra CAM associée à un module de traitement 9 des informations issues des images restituées par la caméra CAM. Ces informations sont transmises à l'unité de commande 7.

La figure 2 illustre une première photométrie dans laquelle les trois modules MB 3, 4 et 5 sont dans une configuration correspondant à un éclairage de feu de route standard c'est-à-dire, une configuration dans laquelle aucun véhicule n'est détecté dans le champ de vision de la caméra CAM.

Quand la fonction feu de route est activée, les trois faisceaux 30, 40 et 50 sont potentiellement superposés à la partie supérieure du faisceau de croisement 20.

Les trois modules MB, 3, 4 et 5 génèrent respectivement trois faisceaux 30, 40 et 50 qui sont alignés et adjacents par leurs côtés latéraux. Cependant une légère superposition des trois faisceaux 30, 40 et 50 permettra de traiter l'homogénéité liée à l'association de ces différents faisceaux.

D'autre part, les segments de faisceaux 31-34, 41-44, 51-54 de chaque module MB 3, 4 et 5 se chevauchent à l'intérieur de leurs faisceaux principaux respectifs 30, 40 et 50, ce qui permet d'améliorer le flouté de la distribution du flux lumineux et donc d'éviter l'apparition d'un effet dit d' « arrête franche ».

Les modules MB 3, 4 et 5 comprennent de préférence chacun un moteur (non représenté) agencé pour régler indépendamment les uns des autres, la rotation du module auquel il est destiné, autour de son axe de rotation vertical, ce qui se traduit par un déplacement horizontal (en azimut) des segments de faisceaux projetés par les modules MB 3, 4 et 5.

Le projecteur 1 comprend également un moyen de réglage 6, lequel peut inclure les moteurs précédemment évoqués, pour régler la rotation des modules MB 3, 4 et 5 autour d'un axe perpendiculaire à l'axe de rotation vertical des modules (déplacement en site)

Le projecteur 1 est couplé à une unité de commande 7 pour émettre un ordre aux moyens de réglages 6 permettant d'orienter chacun des modules d'éclairage 2, 3, 4 et 5 et commander l'intensité lumineuse de chaque module MB 3, 4 et 5 indépendamment les uns des autres.

Grace à l'agilité des trois modules MB 3, 4, 5, (rotation indépendante des modules autour de leur axe vertical/azimut et commune en site) il est ainsi possible de les déplacer de manière à satisfaire, en termes d'éclairage, la plupart des situations de vie auxquelles le véhicule porteur est confronté de nuit sur tout type de route ; chaque module complémentaire MB 3, 4, 5 ayant un débattement angulaire en azimut au moins du même ordre de grandeur que l'angle du champ de vision de la caméra (de l'ordre de 45°).

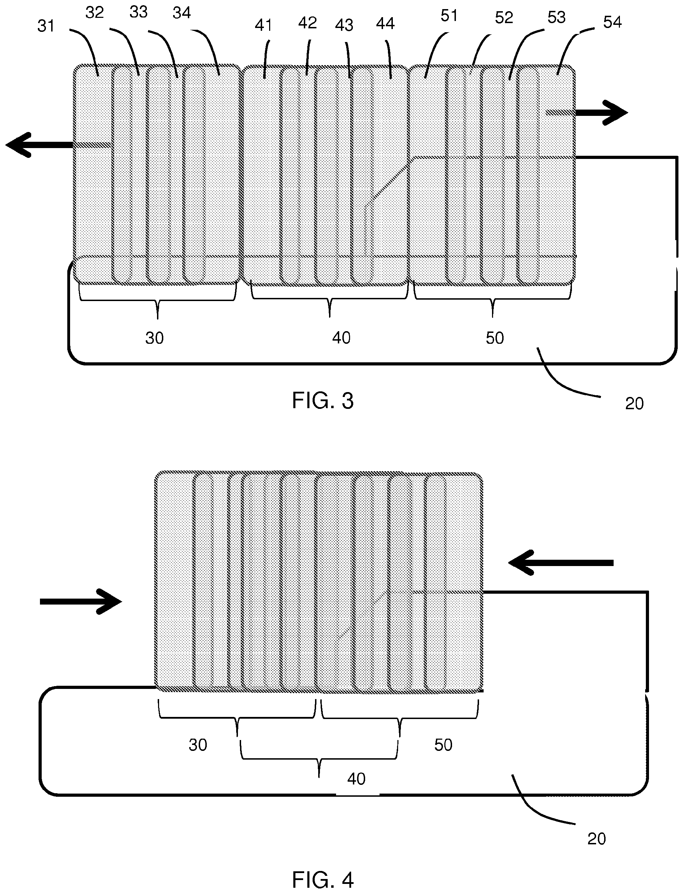

L'agilité des modules MB, 3, 4 et 5, en azimut, est symbolisée schématiquement sur les figures 3 à 5, par des flèches en trait plein.

La figure 3 illustre une deuxième photométrie dans laquelle les trois modules MB, 3, 4 et 5 sont commandés pour se déplacer ensemble en azimut soit sur la gauche (flèche de gauche) soit vers la droite (flèche de droite) pour étendre le faisceau lumineux résultant plutôt vers la gauche ou plutôt vers la droite de la route.

La figure 4 illustre une troisième photométrie dans laquelle les trois modules MB, 3, 4 et 5 sont commandés pour concentrer le flux lumineux résultant vers le centre de la route.

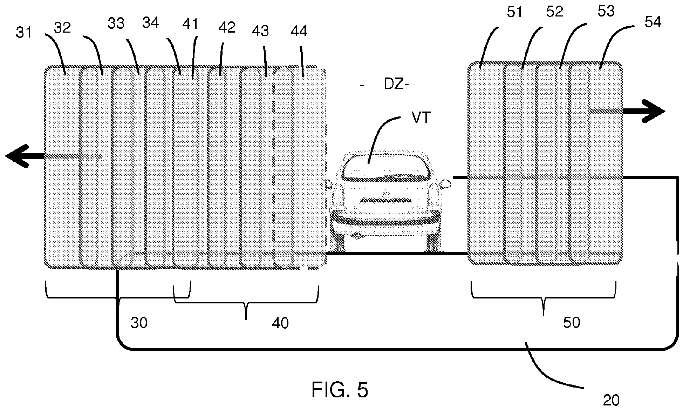

La figure 5 illustre une quatrième photométrie dans laquelle les trois modules MB 3, 4 et 5 sont commandés pour s'écarter vers la gauche et vers la droite pour tenir compte d'un véhicule VT précédent le véhicule porteur VP et créer une zone sombre DZ ou « tunnel », entre le véhicule porteur VP et le véhicule précédent VT le véhicule porteur VP. Dans le « tunnel » DZ seul le faisceau de croisement est activé.

Ainsi dans l'exemple de la figure 5, le segment 44, le plus à droite du module 40, situé immédiatement à gauche du véhicule VT et délimité par une ligne fermée discontinue, peut être commandé pour s'ajuster progressivement au bord latéral gauche du véhicule VT.

Dans l'exemple considéré, les deux modules MB 3 et 4 ont été commandés pour se déplacer conjointement vers la gauche tandis que le seul module MB 5 a été commandé pour se déplacer vers la droite

Grace à la segmentation des faisceaux, l'agilité des modules MB 3, 4 et 5, la sélectivité de l'activation/désactivation de l'éclairage et la progressivité de l'intensité lumineuse de chacun des segments de faisceaux, il est possible d'ajuster au plus près les faisceaux par rapport aux autres véhicules et l'environnement du véhicule porteur (bas-côtés, panneau de signalisation, autoroute ...) et ce quelle que soit la distance séparant le véhicule porteur VP de autres véhicules VT présent dans le champ de vision de la caméra.

Grâce à l'agilité des modules MB 3, 4 et 5, l'unité de commande 7 commande le déplacements des modules MB 3, 4 et 5 de manière à pouvoir suivre les autres véhicules présents dans le champ de vision de la caméra de manière à toujours avoir la possibilité de positionner des segments de faisceau de manière précise sur les côtés des autres véhicules et ce, quelle que soit leur distance par rapport au véhicule porteur VP.

Cette fonctionnalité est impossible avec un système Matrix Beam statique.

L'impact négatif de l'effet tunnel (perte provisoire de visibilité) est limité ainsi que les désagréments dus aux transitions brutales de changement d'intensité pouvant provoquer une perte d'attention pour le conducteur du véhicule porteur et des autres véhicules présents dans la zone d'éclairage.

Le tunnel DZ est créé en conservant la totalité du flux lumineux disponible : pas de perte de flux, gain en largeur et effet dynamique perceptible par le conducteur de manière fluide ou progressive (pas de transition brutale).

Les figures suivantes permettent de mettre en scène différentes situations de vie d'un véhicule porteur VP évoluant de nuit sur une route à une ou plusieurs voies de circulation en présence d'autres véhicule VTn avec la formation de faisceaux correspondante.

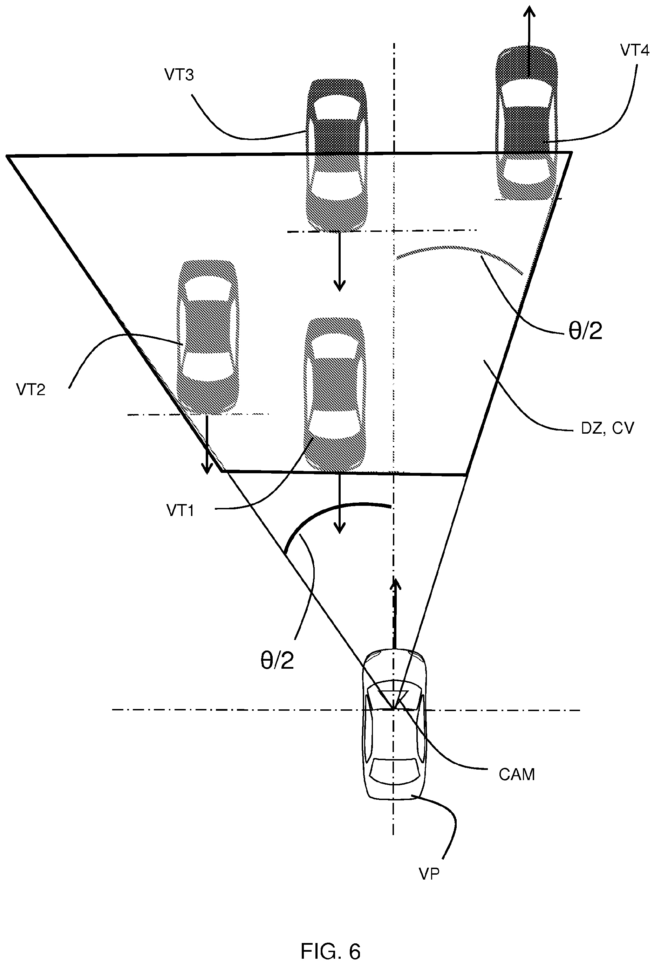

La figure 6 illustre une première situation de vie dans laquelle quatre véhicules VT1-VT4 sont détectés dans le champ de vision CV d'une caméra CAM portée par le véhicule porteur VP en l'absence de modules MB 3, 4 et 5 selon l'invention. L'angle d'ouverture θ de la caméra CAM est centré sur l'axe longitudinal du véhicule porteur VP.

Le véhicule porteur VP et les quatre autres véhicules VT1-VT4 circulent sur une route à deux fois deux voies.

Trois véhicules VT1-VT3 circulent, dans le sens de circulation opposé, au véhicule porteur VP et le quatrième véhicule VT4 circule dans le même sens de circulation que le véhicule porteur VP. Deux des véhicules VT1 et VT3 circulant en sens opposé, se suivent sur la voie de gauche et sont en train de dépasser un troisième véhicule VT2 qui circule sur la voie de droite.

Le quatrième véhicule VT4, circulant dans le même sens de circulation que le véhicule porteur VP, circule sur la voie de droite et est en train de se faire dépasser par le véhicule porteur VP.

Dans une telle situation et avec des projecteurs équipés de la fonctionnalité Matrix Beam mais avec des modules à mobilité réduite voire inexistante, il est impossible de rester en feu de route. Dans une telle situation les feux de croisement sont donc les seuls à être activés.

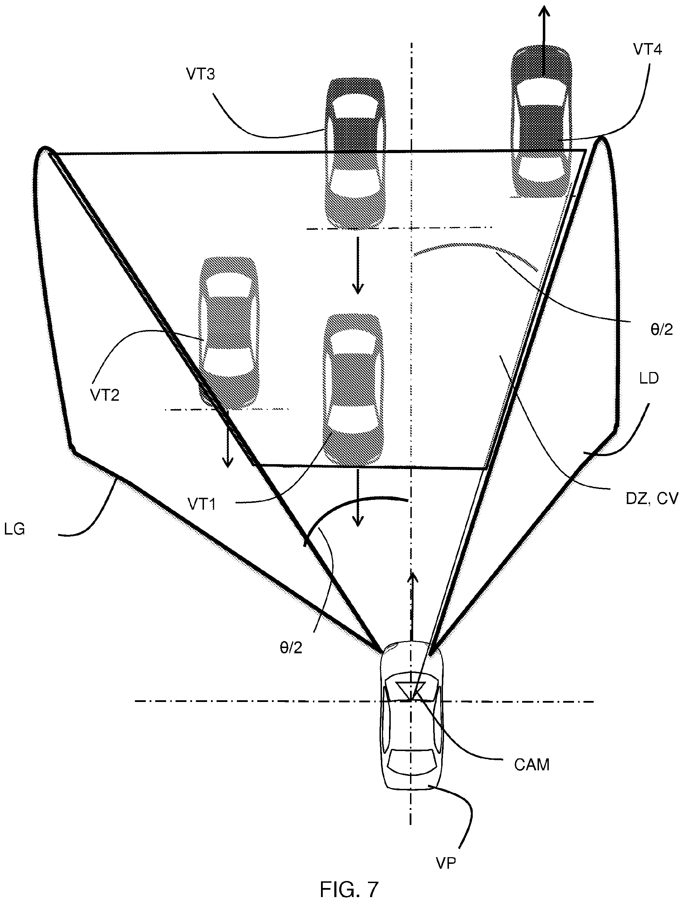

La figure 7 illustre la même première situation de vie mais avec des projecteurs équipés de modules BM 3, 4 et 5 dynamiques selon l'invention, c'est-à-dire des modules mobiles indépendamment en azimut et de manière commune en site et dont l'intensité lumineuse est réglable de façon indépendante pour chaque module 3, 4 et 5.

L'apport dû à la mobilité des modules MB 3, 4 et 5 dynamiques permet, notamment dans la situation illustrée à la figure 7, d'éclairer les bas-côtés et ainsi de maintenir la prestation d'un éclairage optimal sans éblouir les conducteurs des autres véhicules.

Il est possible de n'utiliser que les modules MB externes ou plus si besoin, en fonction de l'angle d'ouverture maximal permis par les modules MB 3, 4 et 5 dynamiques.

Les modules MB externes 5 du projecteur de droite 1, respectivement du projecteur de gauche, génèrent un segment de faisceau qui forme un lobe LD, respectivement un lobe LG qui viennent lécher le bord respectivement l'arrière gauche du véhicule VT4 et l'avant droit du véhicule VT2 qui sont les véhicules situés les plus à l'extérieur de la zone DZ (Tunnel) comprise à l'intérieur de l'angle d'ouverture CV de la caméra CAM.

D'autres situations de vie sont maintenant décrites qui se basent sur le même principe, à savoir, optimiser l'utilisation des segments de faisceau et donc la mobilité des modules MB 3, 4 et 5 pour répondre aux différentes situations de vie rencontrées par le véhicule porteur VP.

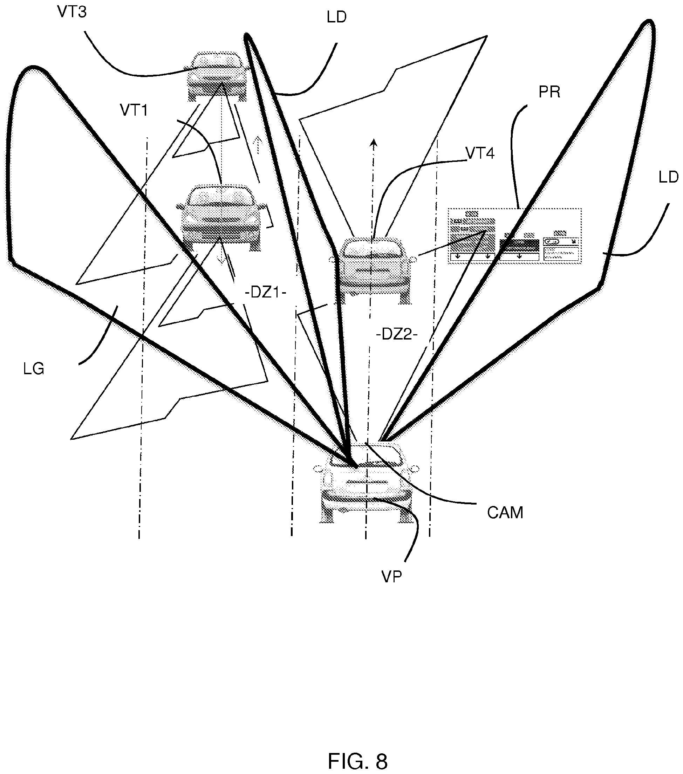

La figure 8 illustre une deuxième situation de vie sensiblement identique à celle de la figure 7 mais dans laquelle, un troisième lobe LC est généré entre les véhicules VT1 et VT3 venant dans le sens de circulation opposé au véhicule porteur VP, et le véhicule VT4 précédent le véhicule porteur VP sur sa voie.

D'autre part, le lobe extérieur droit LD est orienté de manière à ne pas éclairer la totalité d'un panneau de signalisation routière PR situé sur le bas-côté, à droite, de la route, et ce afin de ne pas éblouir le conducteur du véhicule porteur VP par réflexion du feu de route sur le panneau PR.

Deux tunnels DZ1 et DZ2 sont donc créés respectivement par un ou plusieurs des modules MB 3, 4 et 5 des projecteurs 1 du véhicule porteur VP : le premier tunnel DZ1 est créé entre le lobe extérieur gauche LG et le lobe central LC, et le deuxième tunnel DZ2, entre le lobe central LC et le lobe extérieur droit LD. Le lobe extérieur gauche LG vient lécher l'avant droit du véhicule VT1 et le lobe central vient lécher l'avant gauche du véhicule VT3. Ce même lobe central LC vient lécher l'arrière gauche du véhicule VT4 en évitant d'illuminer le rétroviseur latéral gauche du véhicule VT4. Cela est rendu possible en désactivant un module MB comme dans l'exemple illustré à la figure 5. Le lobe extérieur droit LD s'écarte volontairement du bord droit du véhicule VT4 pour laisser uniquement les feux de croisement du véhicule porteur VP et illuminer uniquement la partie du panneau routier PR la plus proche du champ de vision principal du conducteur et ce, afin de ne pas éblouir le conducteur du véhicule porteur VP.

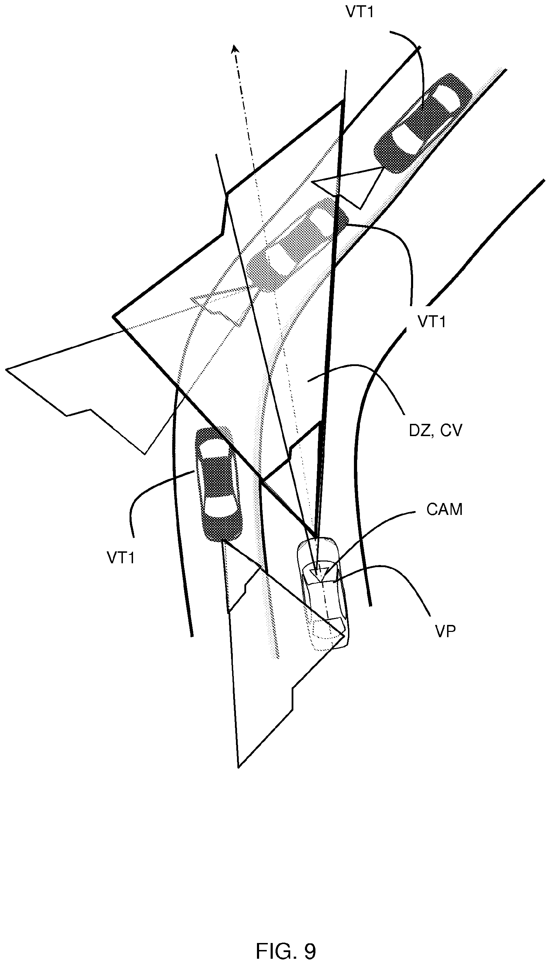

Les figures 9 à 11 suivantes illustrent une troisième situation de vie dans laquelle le véhicule porteur VP aborde un virage à droite sur une route à une voie de circulation dans chaque sens et l'évolution/ajustement de l'éclairage généré par le véhicule porteur VP en fonction de la position du véhicule VT1 par rapport au véhicule porteur VP.

La figure 9 illustre le cas dans lequel le véhicule porteur VP n'est pas équipé de modules MB 3, 4 et 5 dynamiques selon l'invention.

Dans un tel cas, le seul faisceau utilisé et autorisé est ici le faisceau de feu de croisement tant que le véhicule VT1 est dans le champ de la caméra. La fonction « Matrix Beam » est ici inopérante.

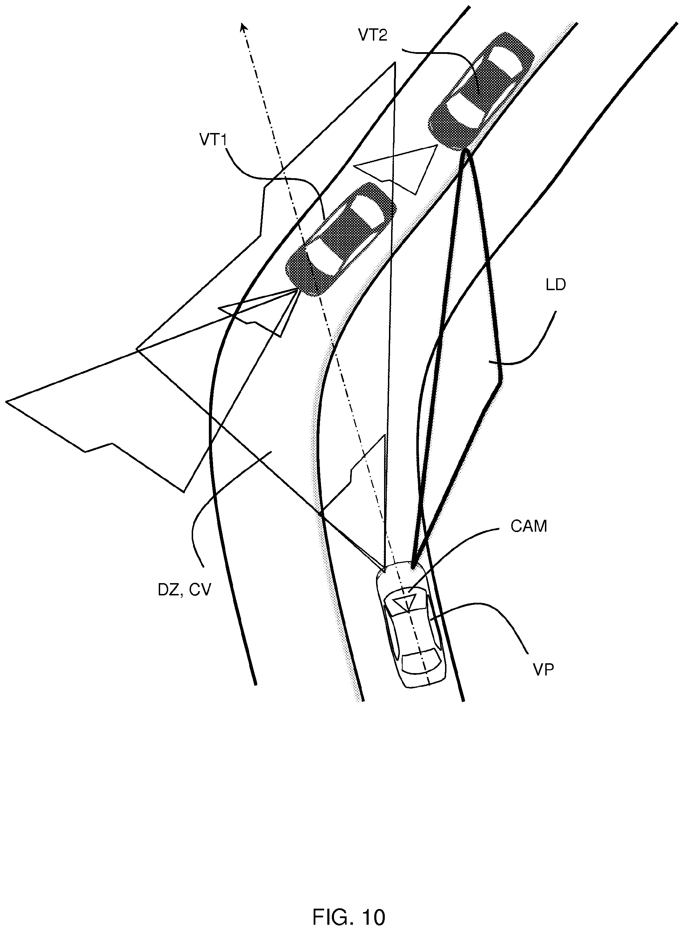

La figure 10 illustre la même troisième situation de vie mais dans le cas où le véhicule porteur VP est maintenant équipé de modules MB 3, 4 et 5 dynamiques selon l'invention.

Dans une première étape, un premier véhicule VT1 est détecté dans le champ de vision de la caméra CAM. Un certain nombre des modules MB sont éteints.

L'agilité des modules MB 3, 4 et 5 et notamment le décalage en azimut vers la droite du module extérieur 5 du projecteur droit 1, permet d'éclairer l'intérieur du virage et d'anticiper les obstacles à venir, ici un autre véhicule VT2.

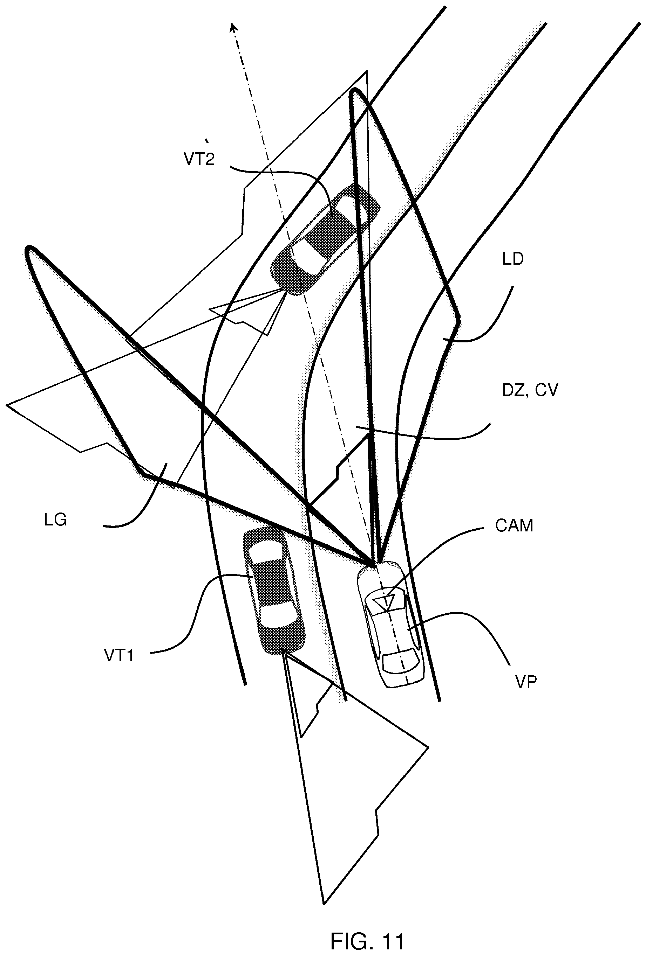

La figure 11 illustre une deuxième étape dans laquelle le premier véhicule VT1 est en train de sortir du champ de vision de la caméra CAM.

Les modules extérieurs MB 3, 4 et 5 et leurs segments de faisceaux associés permettent de créer deux lobes de lumière LG et LD à flux maximal dans les zones de non éblouissement pour les véhicules VT1 et VT2.

Grace aux modules MB 3, 4 et 5 selon l'invention, réglables, notamment en azimut, il est donc possible d'effectuer du « Matrix Beam » dynamique alliant la fonction « DBL » en virage, suivi de véhicule, dépassement et croisement.

L'utilisation des modules MB 3, 4 et 5 dynamiques du système selon l'invention, permet également d'intégrer les fonctionnalités de « Marking Light » y compris sur les bas-côtés pour montrer les éventuels gibiers, sur ou sous éclairer les panneaux de signalisation, ...

L'utilisation des modules MB 3, 4 et 5 dynamiques du système selon l'invention, permet également d'intégrer une limitation d'éblouissement sur autoroute pour les camions présents sur la voie de circulation opposée à celle du véhicule porteur.

## Revendications

1. Système d'éclairage pour véhicule automobile (VP), comportant une paire de projecteurs, chaque projecteur (1) comprenant un module d'éclairage principal (2) agencé pour émettre un faisceau de croisement, une pluralité de modules d'éclairage complémentaires (3, 4, 5) adjacents, agencés pour émettre chacun un faisceau de lumière (30, 40, 50) correspondant à une portion de faisceau de route, au moins un capteur d'images (CAM) porté par le véhicule porteur (VP) apte à détecter des obstacles (VTn) présents dans le champ de vision du capteur d'images (CAM), une unité de commande (7) des modules d'éclairage complémentaires (3, 4, 5), et des moyens de réglage (6) en site et en azimut des modules d'éclairage (2, 3, 4, 5), le système étant tel que les modules complémentaires (3, 4, 5) sont aptes à être commandés indépendamment en azimut en fonction de la position des obstacles détectés et comportent chacun une pluralité de sources de lumière aptes à générer respectivement des segments de faisceaux de route, les modules complémentaires étant agencés et commandés par l'unité de commande (7) pour éclairer des zones en complément du faisceau de croisement (20) à l'aide des segments de faisceaux en fonction de la détection d'un ou plusieurs obstacles (VTn) situés dans le champ de vision du capteur d'images (CAM) pour réaliser un complément d'éclairage dans les zones non couvertes par le faisceau de croisement (20) et/ou pour créer une ou plusieurs zones sombres (DZn) entre le véhicule porteur (VP) et le ou les obstacles (VTn) détectés en éteignant des segments de faisceaux correspondants.

2. Système selon la revendication 1, **caractérisé en ce que** chaque module complémentaire (3, 4, 5) a au moins un débattement angulaire en azimut du même ordre de grandeur que l'angle du champ de vision du capteur d'images (CAM).

3. Système selon l'une des revendications précédentes, caractérisé en que les segments de faisceaux de chaque module complémentaire (3, 4, 5) se chevauchent.

4. Système selon l'une des revendications précédentes, **caractérisé en ce que** l'unité de commande (7) est apte à commander l'intensité de l'éclairage de chacun des modules complémentaires (3, 4, 5) au flux maximal.

5. Système selon l'une des revendications précédentes, **caractérisé en ce que** chaque module complémentaire (3, 4 et 5) est identique et est constitué d'un équipage mobile, comportant un boitier mobile en rotation autour de son axe vertical et supportant de manière fixe, d'un premier côté, un réflecteur de lumière, et d'un autre côté, opposé au premier, une lentille de projection apte à projeter les segments de faisceaux, générés respectivement par une pluralités de sources lumineuses disposées en regard du réflecteur ; les segments de faisceaux étant réfléchis par le réflecteur dans des directions perpendiculaires au plan principal de la lentille.

6. Procédé pour la mise en œuvre d'un système d'éclairage selon l'une des revendications précédentes, **caractérisé en ce qu'**il consiste :
- à détecter un obstacle (VTn) dans le champ de vision du capteur d'images (CAM) ;
- à commander le déplacement en azimut d'un ou plusieurs modules complémentaires (3, 4, 5) en fonction de la position de l'obstacle (VTn) détecté dans le champ de vision du capteur d'images (CAM), et
- à allumer ou éteindre un ou plusieurs segments de faisceaux de modules complémentaires déterminés en fonction de la position de l'obstacle (VT) par rapport au véhicule porteur (VP) pour créer une zone sombre (DZ) en direction de l'obstacle (VT)

7. Procédé selon la revendication 6, **caractérisé en ce qu'**il consiste, lorsque plusieurs obstacles (VTn) sont identifiés à l'intérieur du champ de vision du capteur d'images (CAM) :
- à créer et ajuster plusieurs zones sombres (DZn) en fonction des obstacles détectés dans le champ de vision du capteur d'images (CAM) en éteignant un ou plusieurs segments de faisceaux correspondants en fonction de la position des obstacles (VTn) par rapport au véhicule porteur (VP).

8. Procédé selon l'une des revendications 6 ou 7, **caractérisé en ce que** l'intensité du ou des segments de faisceaux est commandée pour être maximale en dehors de la ou des zones sombres (DZn).

9. Procédé selon l'une des revendications 6 à 8, **caractérisé en ce qu'**il consiste à allumer ou éteindre le ou les segments de faisceaux de manière progressive.

10. Procédé selon l'une des revendications 6 à 9, **caractérisé en ce qu'**il consiste à créer et ajuster une ou plusieurs zones sombres (DZn) en fonction du ou des obstacles détectés dans le champ de vision du capteur d'images (CAM) quelle que soit la distance séparant le ou les obstacles du véhicule porteur (VP).

11. Véhicule automobile (VP) comportant un système d'éclairage selon l'une des revendications 1 à 5.

## Patentansprüche

1. Beleuchtungssystem für Kraftfahrzeug (VP), das ein Paar von Scheinwerfern umfasst, wobei jeder Scheinwerfer (1) ein Hauptbeleuchtungsmodul (2) umfasst, das eingerichtet ist, um einen Abblendlichtstrahl abzugeben, eine Vielzahl angrenzender ergänzender Beleuchtungsmodule (3, 4, 5), die eingerichtet sind, um jeweils einen Lichtstrahl (30, 40, 50) abzugeben, der einem Fernlichtstrahlabschnitt entspricht, mindestens einen Bildersensor (CAM), der von dem Trägerfahrzeug (VP) getragen wird, der geeignet ist, Hindernisse (VTn), die in dem Sichtfeld des Bildersensors (CAM) anwesend sind, zu erfassen, eine Steuereinheit (7) der ergänzenden Beleuchtungsmodule (3, 4, 5), und Mittel zum Einstellen in Azimut und Elevation der Beleuchtungsmodule (2, 3, 4, 5), wobei das System derart beschaffen ist, dass die ergänzenden Module (3, 4, 5) geeignet sind, unabhängig in Azimut in Abhängigkeit von der Position der erfassten Hindernisse gesteuert zu werden und jeweils eine Vielzahl von Lichtquellen umfassen, die geeignet sind, jeweils Fernlichtstrahlsegmente zu erzeugen, wobei die ergänzenden Module eingerichtet sind und von der Steuereinheit (7) gesteuert werden, um Zonen ergänzend zu dem Abblendlichtstrahl (20) mit Hilfe der Strahlsegmente in Abhängigkeit von dem Erfassen eines oder mehrerer Hindernisse (VTn), die sich in dem Sichtfeld des Bildersensors (CAM) befinden, zu beleuchten, um eine Beleuchtungsergänzung in den Zonen herzustellen, die von dem Abblendlichtstrahl (20) nicht gedeckt werden, und/oder um eine oder mehrere Schattenzonen (DZn) zwischen dem Trägerfahrzeug (VP) und dem oder den erfassten Hindernis(sen) (VTn) zu schaffen, indem entsprechende Strahlsegmente ausgeschaltet werden.

2. System nach Anspruch 1, **dadurch gekennzeichnet, dass** jedes ergänzende Modul (3, 4, 5) mindestens einen Winkelausschlag in Azimut in derselben Größenordnung aufweist wie der Winkel des Sichtfelds des Bildersensors (CAM).

3. System nach einem der vorstehenden Ansprüche, **dadurch gekennzeichnet, dass** die Strahlsegmente jedes ergänzenden Moduls (3, 4, 5) einander überlagern.

4. System nach einem der vorstehenden Ansprüche, **dadurch gekennzeichnet, dass** die Steuereinheit (7) geeignet ist, die Beleuchtungsstärke jedes der ergänzenden Module (3, 4, 5) auf den maximalen Fluss zu steuern.

5. System nach einem der vorstehenden Ansprüche, **dadurch gekennzeichnet, dass** jedes ergänzende Modul (3, 4 und 5) identisch ist und aus einer mobilen Ausstattung besteht, die ein Gehäuse umfasst, das in Drehung um seine vertikale Achse beweglich ist und auf stationäre Art auf einer ersten Seite einen Lichtreflektor trägt, und auf einer anderen Seite, die der ersten Seite entgegengesetzt ist, eine Projektionslinse, die geeignet ist, um die Lichtsegmente zu projizieren, die jeweils von einer Vielzahl von Lichtquellen, die gegenüber dem Reflektor angeordnet sind, erzeugt werden; wobei die Strahlsegmente von dem Reflektor in Richtungen senkrecht zu der Hauptebene der Linse reflektiert werden.

6. Verfahren zur Umsetzung eines Beleuchtungssystems nach einem der vorstehenden Ansprüche, **dadurch gekennzeichnet, dass** es aus Folgendem besteht:
- Erfassen eines Hindernisses (VTn) in dem Sichtfeld des Bildersensors (CAM);
- Steuern der Verlagerung in Azimut eines oder mehrerer ergänzender Module (3, 4, 5) in Abhängigkeit von der Position des Hindernisses (VTn), das in dem Sichtfeld des Bildersensors (CAM) erfasst wird, und
- Einschalten oder Ausschalten eines oder mehrerer Strahlsegmente bestimmter ergänzender Module in Abhängigkeit von der Position des Hindernisses in Bezug auf das Trägerfahrzeug (VP), um eine Schattenzone (DZ) in Richtung des Hindernisses (VT) zu schaffen.

7. Verfahren nach Anspruch 6, **dadurch gekennzeichnet, dass** es darin besteht, wenn mehrere Hindernisse (VTn) in dem Inneren des Sichtfelds des Bildersensors (CAM) identifiziert werden:
- mehrere Schattenzonen in Abhängigkeit von den in dem Sichtfeld des Bildersensors (CAM) erfassten Hindernissen durch Ausschalten eines oder mehrerer entsprechender Strahlsegmente in Abhängigkeit von der Position der Hindernisse (VTn) in Bezug auf das Trägerfahrzeug (VP) zu schaffen und einzustellen.

8. Verfahren nach einem der Ansprüche 6 oder 7, **dadurch gekennzeichnet, dass** die Stärke des oder der Strahlsegmente gesteuert wird, um außerhalb der Schattenzone(n) (DZn) maximal zu sein.

9. Verfahren nach einem der Ansprüche 6 bis 8, **dadurch gekennzeichnet, dass** es darin besteht, das oder die Strahlsegmente allmählich einzuschalten oder auszuschalten.

10. Verfahren nach einem der Ansprüche 6 bis 9, **dadurch gekennzeichnet, dass** es darin besteht, eine oder mehrere Schattenzonen (DZn) in Abhängigkeit von dem oder den Hindernis(sen), die in dem Blickfeld des Bildersensors (CAM) erfasst werden, ungeachtet der Distanz, die das oder die Hindernisse von dem Trägerfahrzeug (VP) trennt, zu schaffen und einzustellen.

11. Kraftfahrzeug (VP), das ein Beleuchtungssystem nach einem der Ansprüche 1 bis 5 umfasst.

## Claims

1. Lighting system for a motor vehicle (VP), including a pair of headlamps, each headlamp (1) comprising a main lighting module (2) arranged to emit a dipped beam, a plurality of adjacent additional lighting modules (3, 4, 5), arranged to each emit a light beam (30, 40, 50) corresponding to a main beam portion, at least one image sensor (CAM) carried by the carrier vehicle (VP) able to detect obstacles (VTn) present in the field of vision of the image sensor (CAM), a unit for controlling (7) additional lighting modules (3, 4, 5), and means for adjusting (6) in site and in azimuth of the lighting modules (2, 3, 4, 5), with the system being such that the additional modules (3, 4, 5) are able to be controlled separately in azimuth according to the position of the obstacles detected and each comprise a plurality of light sources capable of generating, respectively, segments of main beams, the additional modules being arranged and controlled by the control unit (7) to illuminate areas in addition to the dipped beam (20) by using the beam segments depending on the detection of one or more obstacles (VTn) located in the field of vision of the image sensor (CAM) so as to produce additional lighting in the areas not covered by the dipped beam (20) and/or to create one or more dark areas (DZn) between the carrier vehicle (VP) and the detected obstacle or obstacles (VTn) by switching off corresponding beam segments.

2. System according to claim 1, **characterised in that** each additional module (3, 4, 5) has at least one angular clearance in azimuth of the same magnitude as the angle of the field of vision of the image sensor (CAM).

3. System according to one of the preceding claims, **characterised in that** the beam segments of each additional module (3, 4, 5) overlap.

4. System according to one of the preceding claims, **characterised in that** the control unit (7) is able to control the intensity of the lighting of each one of the additional modules (3, 4, 5) to the maximum flux.

5. System according to one of the preceding claims, **characterised in that** each additional module (3, 4 and 5) is identical and is formed from a mobile assembly, comprising a housing mobile in rotation about the vertical axis thereof and supporting in a fixed manner, on one side, a light reflector, and on the other side, opposite the first, a projection lens able to project the beam segments, generated respectively by a plurality of light sources arranged facing the reflector; with the beam segments being reflected by the reflector in directions that art perpendicular to the main plane of the lens.

6. Method for implementing a lighting system according to one of the preceding claims, **characterised in that** it consists of:
- detecting an obstacle (VTn) in the field of vision of the image sensor (CAM);
- controlling the displacement in azimuth of one or several additional modules (3, 4, 5) depending on the position of the obstacle (VTn) detected in the field of vision of the image sensor (CAM), and
- switching on or switching off one or several beam segments of additional modules determined depending on the position of the obstacle (VT) with respect to the carrier vehicle (VP) in order to create a dark area (DZ) in the direction of the obstacle (VT)

7. Method according to claim 6, **characterised in that** it consists, when several obstacles (VTn) are identified inside the field of vision of the image sensor (CAM), of:
- creating and adjusting several dark areas (DZn) depending on the obstacles detected in the field of vision of the image sensor (CAM) by switching off one or several corresponding beam segments according to the position of the obstacles (VTn) with respect to the carrier vehicle (VP).

8. Method according to one of claims 6 or 7, **characterised in that** the intensity of the beam segment or segments is controlled in order to be maximal outside of the dark area or areas (DZn).

9. Method according to one of claims 6 to 8, **characterised in that** it consists of switching on or switching off the beam segments progressively.

10. Method according to one of claims 6 to 9, **characterised in that** it consists of creating and adjusting one or several dark areas (DZn) depending on the detected obstacle or obstacles in the field of vision of the image sensor (CAM) regardless of the distance that separates the obstacle or obstacles from the carrier vehicle (VP).

11. Motor vehicle (VP) comprising a lighting system according to one of claims 1 to 5.
